# EUROPEAN PATENT APPLICATION

(11) **EP 3 379 398 A1**
(43) Date of publication of application: **26.09.2018**
(21) Application number: 16865709.6
(22) Date of filing: 10.11.2016
(51) Int. Cl.: G06F 3/0481

(54) **METHOD AND DEVICE FOR DISPLAYING ICONS**

(30) Priority: 20.11.2015 CN 201510810950
(71) Applicant: Tencent Technology (Shenzhen) Company Limited, Guangdong 518000 (CN)
(72) Inventor: REN, Shimeng, Shenzhen city Guangdong 518000 (CN)
(74) Representative: Penza, Giancarlo
(86) International application number: PCT/CN2016/105336
(87) International publication number: WO 2017/084532

(57) **Abstract**

The disclosure discloses a method and device for displaying icons. The method includes that: a first icon and at least one display track are displayed in an interface, wherein the first icon is a user icon of a user currently logging in an application program, and the display track is a path centering on the first icon and around the first icon (S12); at least one application function started after the user logs in the application program is acquired (S14); a function icon of any application function is acquired (S16); and the function icon of the any application function is displayed on the corresponding display track (S18). The technical problem of the poor display effect caused by a manner of displaying the user icon of the user currently logging in the application program and the related function icons in a list form in the related technology is solved.

## Description

### Technical Field

The disclosure which claims priority of Chinese Patent Application No. 20151081109505, filed November 20, 2015, and named after "method and device for displaying icons", the entire contents of which are hereby incorporated by reference.

Embodiments of the disclosure relate to the field of Internet, and particularly to a method and device for displaying icons.

### Background

Along with widespread use of the intelligent equipment, types and number of application programs continuously increase. At present, most of user interfaces of application programs on the market display related functions by adopting a static list form. For example, a common display manner for a game entry of a game community is that related function icons of the game and a user icon of a user logging in the game are listed one by one in a list form. In a related technology, a manner of displaying a user icon of a user currently logging in an application program and related function icons by adopting a list form has the following shortcomings.
1: displaying the user icon of the user logging in the application program and the related function icons of the application program in the list form may not reflect an association between related functions of the application program and the user logging in the application program. For example, a function icon which is frequently used by the login user in the application program may not be directly displayed, so that the login user is required to search a list for the function every time when using the function, which greatly reduces the user experience.
2: using an interface in a static list form for a long time may cause visual fatigue of a user. For alleviating the visual fatigue of the user, replacement of an illustrating picture or displaying of some dynamic effects in the interface is usually adopted in the related technology. However, these dynamic effects are only pure dynamic special effects which are lack of vividness and have no specific meanings. Therefore, the display effect of the icons in the interface is poor.

For the problem of poor display effect caused by a manner of displaying a user icon of a user currently logging in an application program and related function icons in a list form in the related technology, there is yet no effective solution.

### Summary

Embodiments of the disclosure provide a method and device for displaying icons, so as to at least solve the technical problem of poor display effect caused by a manner of displaying a user icon of a user currently logging in an application program and related function icons in a list form in the related technology.

According to an aspect of the embodiments of the disclosure, a method for displaying icons is provided, which may include that: a first icon and at least one display track are displayed in an interface, wherein the first icon may be a user icon of a user currently logging in an application program, and the display track may be a path centering on the first icon and around the first icon; at least one application function started after the user logs in the application program is acquired; a function icon of any application function is acquired; and the function icon of the any application function is displayed on a corresponding display track.

According to another aspect of the embodiments of the disclosure, a device for displaying icons is further provided, which may include: a first display module, configured to display a first icon and at least one display track in an interface, wherein the first icon may be a user icon of a user currently logging in an application program, and the display track may be a path centering on the first icon and around the first icon; a first acquisition module, configured to acquire at least one application function started after the user logs in the application program; a second acquisition module, configured to acquire a function icon of any application function; and a second display module, configured to display the function icon of the any application function on a corresponding display track.

In the embodiments of the disclosure, the following manner is adopted: the first icon and the at least one display track are displayed in the interface, wherein the first icon is the user icon of the user currently logging in the application program, and the display track is the path centering on the first icon and around the first icon; the at least one application function started after the user logs in the application program is acquired; the function icon of the any application function is acquired; and the function icon of the any application function is displayed on the corresponding display track. The user icon and the display track are displayed in the interface, and the function icon of the application function started after the user logs in the application program is displayed on the corresponding display track, so that a purpose of directly and vividly displaying the user icon of the user logging in the application program and the related function icon in a graphical representation manner is achieved, technical effects of directly displaying a relationship between the user icon of the user logging in the application program and the related function icon, enhancing a display effect of the interface and improving the user's use experience are achieved, and the technical problem of poor display effect caused by a manner of displaying the user icon of the user currently logging in the application program and the related function icons in a list form in the related technology is further solved.

### Brief Description of the Drawings

The drawings described here are adopted to provide a further understanding to the disclosure, and form a part of the disclosure. Schematic embodiments of the disclosure and descriptions thereof are adopted to explain the disclosure and not intended to form improper limits to the disclosure. In the drawings:
Fig. 1 is a hardware structure block diagram of a computer terminal for a method for displaying icons according to an embodiment of the disclosure;
Fig. 2 is a flowchart of a method for displaying icons according to an embodiment of the disclosure;
Fig. 3 is an optional schematic diagram of display tracks according to an embodiment of the disclosure;
Fig. 4 is an optional schematic diagram of displaying function icons on corresponding display tracks according to an embodiment of the disclosure;
Fig. 5 is another optional schematic diagram of displaying function icons on corresponding display tracks according to an embodiment of the disclosure;
Fig. 6 is another optional schematic diagram of displaying function icons on corresponding display tracks according to an embodiment of the disclosure;
Fig. 7 is a schematic diagram of a device for displaying icons according to an embodiment of the disclosure;
Fig. 8 is an optional schematic diagram of a device for displaying icons according to an embodiment of the disclosure;
Fig. 9 is another optional schematic diagram of a device for displaying icons according to an embodiment of the disclosure;
Fig. 10 is another optional schematic diagram of a device for displaying icons according to an embodiment of the disclosure;
Fig. 11 is another optional schematic diagram of a device for displaying icons according to an embodiment of the disclosure;
Fig. 12 is another optional schematic diagram of a device for displaying icons according to an embodiment of the disclosure;
Fig. 13 is another optional schematic diagram of a device for displaying icons according to an embodiment of the disclosure;
Fig. 14 is another optional schematic diagram of a device for displaying icons according to an embodiment of the disclosure; and
Fig. 15 is a structure block diagram of a computer terminal according to an embodiment of the disclosure.

### Detailed Description of the Embodiments

In order to make the solutions of the disclosure better understood by those skilled in the art, the technical solutions in the embodiments of the disclosure will be clearly and completely described below in combination with the drawings in the embodiments of the disclosure. Obviously, the described embodiments are not all embodiments but only part of embodiments of the disclosure. All other embodiments obtained by those skilled in the art on the basis of the embodiments in the disclosure without creative work shall fall within the scope of protection of the disclosure.

It is important to note that terms "first", "second" and the like in the specification, claims and drawings of the disclosure are adopted not to describe a specific sequence or order but to distinguish similar objects. It should be understood that data used like this can be exchanged under a proper condition for implementation of the embodiments of the disclosure described here in sequence except those shown or described herein. In addition, terms "include" and "have" and any transformation thereof are intended to cover nonexclusive inclusions. For example, a process, method, system, product or equipment including a series of steps or units is not limited to those steps or units which are clearly listed, but may include other steps or units which are not clearly listed or intrinsic to the process, the method, the product or the equipment.

At first, part of nouns or terms appearing in a process of describing the embodiments of the disclosure are explained as follows.
First icon: referring to a user icon of a user currently logging in an application program.
Display track: referring to a path centering on the first icon and around the first icon.
Application function: referring to a function of the application program.
Function icon: referring to an icon configured to identify the application function in the application program.

### Embodiment 1

According to the embodiment of the disclosure, a method embodiment of a method for displaying icons is provided. It is important to note that steps shown in the flowchart of the drawing may be executed in a computer system, such as a group of capable of executing instructions in computers. Moreover, although a logic sequence is shown in the flowchart, the shown or described steps may be executed in sequence different from the sequence shown here under some conditions.

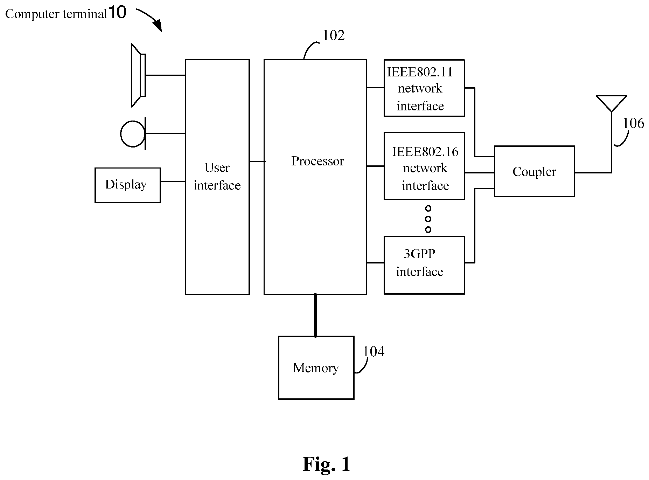

The method embodiment provided by embodiment 1 of the disclosure may be executed in a mobile terminal, a computer terminal or a similar arithmetic device. For example, the method is run on the computer terminal. Fig. 1 is a hardware structure block diagram of a computer terminal for a method for displaying icons according to an embodiment of the disclosure. As shown in Fig. 1, the computer terminal 10 may include one or more (only one is shown in the figure) processor 102 (the processor 102 may include, but not limited to, a processing device such as Micro Control Unit (MCU) or a Field Programmable Gate Array (FPGA)), a memory 104 configured to store data and a transmission device 106 configured for a communication function. Those skilled in the art should know that the structure shown in Fig. 1 is only schematic and not intended to form limits to the structure of the electronic device. For example, the computer terminal 10 may further include components more or fewer than those shown in the Fig. 1, or has a configuration different from that shown in Fig. 1.

The memory 104 may be configured to store a software program and module of application software, for example, a program instruction/module corresponding to the method for displaying the icons in the embodiment of the disclosure. The processor 102 runs the software program or module stored in the memory 104, thereby executing various function applications and data processing, namely implementing the method for displaying the icons. The memory 104 may include a high-speed Random Access Memory (RAM), and may further include a nonvolatile memory, such as one or more magnetic storage devices, flash memories or other nonvolatile solid-state memories. In some examples, the memory 104 may further include memories remotely arranged relative to the processor 102, and these memories remotely arranged may be connected to the computer terminal 10 through a network. An example of the network includes, but not limited to, the Internet, an intranet of an enterprise, a local area network, a mobile communication network and a combination thereof.

The transmission device 106 is configured to receive or send data through a network. A specific example of the network may include a wireless network provided by a communication provider of the computer terminal 10. In an example, the transmission device 106 includes a Network Interface Controller (NIC), which may be connected with other network equipment through a base station, thereby communicating with the Internet. In an example, the transmission device 106 may be a Radio Frequency (RF) module, and is configured to communicate with the Internet in a wireless manner.

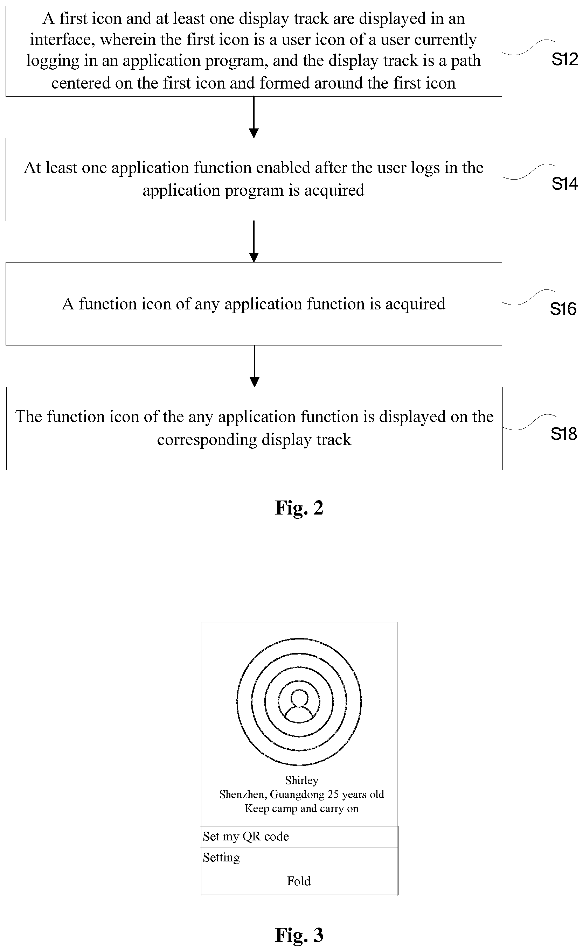

In such a running environment, the disclosure provides a method for displaying icons shown in Fig. 2. The method may be applied to an intelligent terminal equipment, and is executed by a processor in the intelligent terminal equipment, and the intelligent terminal equipment may be an intelligent mobile phone, a tablet computer and the like. There is at least one application program installed in the intelligent terminal equipment, and the type of the application program is not limited in the embodiment of the disclosure, may be a system-type application program, and may also be a software-type application program. The application program in the embodiment of the disclosure includes at least one application function. For example, the application program is a QQ game, wherein the QQ game includes multiple game application functions such as Fighting the Landlord and LinkGame.

Fig. 2 is a flowchart of a method for displaying icons according to an embodiment of the disclosure. As shown in Fig. 2, an optional solution of the method for displaying the icons includes the following steps.

In Step S12, a first icon and at least one display track are displayed in an interface, wherein the first icon is a user icon of a user currently logging in an application program, and the display track is a path centering on the first icon and around the first icon.

In the solution provided by Step S12 of the disclosure, after a user logs in any application program, an intelligent terminal equipment displays an interface corresponding to the application program, and a first icon and at least one display track may be displayed in the interface, wherein the first icon may be a user icon of the user currently logging in the application program, and the first icon is configured to uniquely identify the user logging in the application program. The first icon may be an image including display information such as a user picture and a user signature. A location of the first icon in the interface may be correspondingly regulated according to a size of a display screen of the terminal equipment, so as to achieve an effect of attractive appearance of the interface.

The at least one display track is displayed in the interface, wherein the display track is a path centering on the first icon and around the first icon. A shape of the display track in the interface may be a concentric circle, and may also be a concentric ring or another shape capable of centering on the first icon and around the first icon. The shape of the display track is not specifically limited in the embodiment of the disclosure, and the shape of the display track may be set according to a practical requirement. A distance between any two tracks in multiple display tracks may be the same, and may also be different. However, for attractive appearance of interface display, the distance between any two display tracks in the interface of the embodiment of the disclosure is the same. A display color of each display track may be the same, and may also be different. For directly and clearly distinguishing different display tracks in the interface, the color of each display track is different, that is, each display track uniquely corresponds to one color. Or, a width of each display track is different.

For example, the shape of each display track in the interface is a concentric circle. Fig. 3 is an optional schematic diagram of display tracks according to an embodiment of the disclosure. As shown in Fig. 3, the first icon and the at least one display track are displayed in the display interface of the intelligent terminal equipment, and in addition, other function options are further displayed, for example, "user information", "my Quick Response (QR) code", "setting" and "fold". The first icon is a user picture of the user logging in the application program, the display tracks are circles centering on the user picture and around the user picture of the user, and multiple circles all center on the first icon. For attractive appearance of the interface, a distance between any two circles in the multiple circles is the same. Optionally, the first icon and display tracks displayed in the interface may be designed into a flat panel display effect, and may also be designed into a three-dimensional display effect, that is, the multiple display tracks are three-dimensional surrounding tracks centering on the user picture .

Optionally, the first icon and at least one display track in the interface of the embodiment of the disclosure may be designed to be dynamically displayed. For example, the first icon may jitter at a small amplitude at a location or flicker according to a preset time or the like. A moving bright spot may be designed on the display track, and the moving bright spot may rotate around the first icon along the display track where it is.

According to the embodiment of the disclosure, the first icon and the at least one display track may be displayed in multiple manners, above display manners are only preferred embodiments of the disclosure, and it does not mean that the manners for the method for displaying the icons in the embodiment of the disclosure only include above display manners. For improving a display effect and attractive appearance of the interface, the embodiment of the disclosure may further include other manners capable of enhancing the display effect of the interface, which will not be described with examples one by one herein.

In Step S14, at least one application function started after the user logs in the application program is acquired.

In the solution provided by Step S14 of the disclosure, after the user logs in the application program, at least one application function contained in the application program may be activated and run, a function icon is correspondingly generated for each application function in running, and the function icon is configured to uniquely identify the corresponding application function. A shape and content of the function icon may be designed according to the corresponding application function. For example, an icon of QQ Speed in the QQ game community is an image including a word "Speed".

When the application program is installed in the intelligent terminal equipment for the first time, part of application functions of the at least one application function contained in the application program are in an active state, the other part of application functions are in an inactive state, wherein function icons of the application functions in the active state may be displayed in the interface corresponding to the application program; and function icons of the application functions in the inactive state may not be displayed in the interface corresponding to the application program, and the application functions of this part are required to be activated and installed by the user logging in the application program according to own requirement.

Optionally, the application program in the embodiment may further support the addition or deletion of the application function, and the user logging in the application program may delete an application function which is pre-contained in the application program and in the active state, and may also add a new application function which is not contained in the application program. In the embodiment, by setting the application program to have a function of adding or deleting the application functions the requirement of the user is greatly met and the user' usage experience is improved.

After the user logs in the application program, the application functions in the active state are correspondingly started, and the application functions in the inactive state are not started. A processor of the intelligent terminal equipment detects whether at least one application function in the application program is in the active state or not to acquire the at least one application function started after the user logs in the application program.

In Step S16, a function icon of any application function is acquired.

Optionally, a corresponding relationship between an application function and a function icon is pre-stored in the application program in the embodiment of the disclosure, and after acquiring the at least one application function started after the user logs in the application program by Step S14, the processor may acquire a function icon of the started application function according to the corresponding relationship between the application function and the function icon.

For example, after the user logs in QQ Game, started application functions include Fighting the Landlord, LinkGame and QQ Speed, wherein a function icon of Fighting the Landlord, a function icon of LinkGame and a function icon of QQ Speed are pre-stored in an application program corresponding to QQ Game. After acquiring the started application functions, i.e. Fighting the Landlord, LinkGame and QQ Speed, the processor of the intelligent terminal equipment installed with QQ Game may acquire the function icon of Fighting the Landlord, the function icon of LinkGame and the function icon of QQ Speed according to the corresponding relationship respectively.

According to the embodiment of the disclosure, the corresponding relationship between the application function of the application program and the function icon is pre-stored, so that the processor of the intelligent terminal equipment may conveniently and rapidly search for the function icon of the started application function, and the operation efficiency is further improved.

In Step S18, the function icon of the any application function is displayed on the corresponding display track.

The display track in the embodiment of the disclosure is a track where the function icon is located and which is configured to display the function icon, that is, the function icon acquired by Step S16 may be displayed on the display track in the interface. In an optional solution provided by Step S18 of the disclosure, a number of display tracks may be the same as a number of function icons, that is, each display track is configured to display one function icon. If only one application function is started after the user logs in the application program, only one display track is around the first icon, and a function icon of the application function may be displayed on the display track. If multiple application functions are started after the user logs in the application program, multiple display tracks are around the first icon, and each display track is configured to display one function icon.

In an optional embodiment provided by the disclosure, when multiple function icons are displayed in the interface, a corresponding relationship between the function icons and display tracks is determined by the using parameters of the user logging in the application program for application functions corresponding to the function icons. Specifically, the using parameters of the user for the application functions may be the using frequency, the using time length, the latest using time or the like.

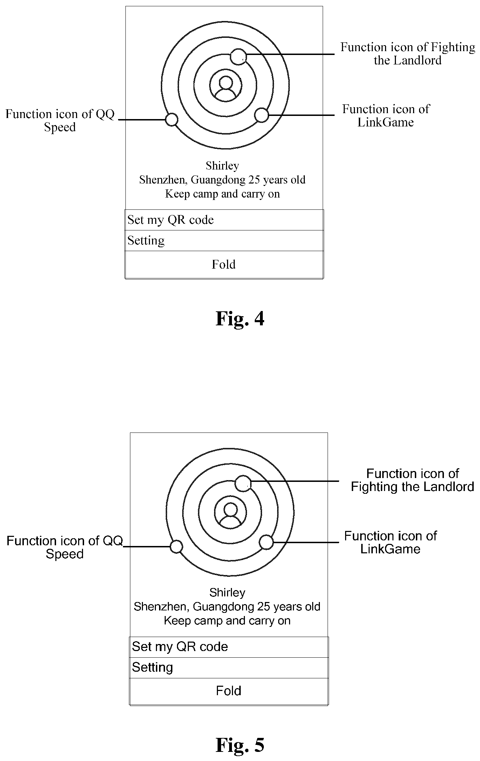

For example, the function icons are displayed on the corresponding display tracks by taking the using frequency of the user for the application functions as reference basis. After the user logs in QQ Game, the started application functions include Fighting the Landlord, LinkGame and QQ Speed. The using frequency of the user logging in QQ Game for Fighting the Landlord is 7 times/week, the using frequency for LinkGame is 5 times/week and the using frequency for QQ Speed is 2 times/week. Fig. 4 is an optional schematic diagram of displaying function icons on corresponding display tracks according to an embodiment of the disclosure. As shown in Fig. 4, three display tracks are displayed around a user picture in the interface, i.e. a first display track, a second display track and a third display track according to a sequence from short distance to long distance away from the user picture respectively. According to a sequence from high using frequency to low using frequency of the user for the application functions, the function icon of Fighting the Landlord is displayed on the first display track, the function icon of LinkGame is displayed on the second display track, and the function icon of QQ Speed is displayed on the third display track. From Fig. 4, it can be directly determined that Fighting the Landlord corresponding to the function icon closest to the user picture is an application function in which the user is interested.

According to the embodiment of the disclosure, the function icons are displayed on the corresponding display tracks according to the using parameters of the user for the application functions, so as to directly display relationships between the user and the application functions corresponding to the function icons in a graphical form, and starting the user to conveniently and rapidly locate the application function in which the user is interested, and greatly improve the user's usage experience.

By Step S12 to Step S18, the solution provided by the disclosure may display the user icon and the display tracks in the interface and display the function icon(s) of one or more application functions activated and run by the user in the application program on the corresponding display track(s) to achieve technical effects of implementing direct and vivid display of the user icon of the user logging in the application program and the related function icon in a graphical representation manner, simultaneously directly displaying the relationship between the user icon of the user logging in the application program and the related function icon, enhancing the display effect of the interface and improving the user' usage experience and further solve the technical problem of poor display effect caused by a manner of displaying the user icon of the user currently logging in the application program and the related function icons in a list form in the related technology.

As an optional implementation mode, after the at least one application function is acquired in Step S14 of the disclosure, the method for displaying the icons in the embodiment of the disclosure may further include that: a using frequency of any application function is acquired. For example, application programs started after the user logs in QQ Game include Fighting the Landlord, LinkGame and QQ Speed. After acquiring Fighting the Landlord, LinkGame and QQ Speed, the processor in the intelligent terminal equipment installed with QQ Game may correspondingly acquire the using frequency of the user for Fighting the Landlord, LinkGame and QQ Speed. For example, the using frequency of the user for Fighting the Landlord is 7 times/week, the using frequency for LinkGame is 5 times/week, and the using frequency for QQ Speed is 2 times/week.

Optionally, according to the method for displaying the icons in the embodiment, after the using frequency of the any application function is acquired, a function icon of each application function may be displayed on the corresponding display track according to the using frequency of the application function. Specifically, under the condition that multiple application functions are started in Step S18, the step that the function icon of the any application function is displayed on the corresponding display track may include the following steps.

In Step S180, a using frequency of each application function is sequenced. Optionally, in the embodiment, the using frequency of each application function may be sequenced according to a sequence from high using frequency to low using frequency, and may also be sequenced according to a sequence from low using frequency to high using frequency. A sequence result of the using frequency will be determined as a basis for a placement location of the function icon of each application function on the display tracks.

In Step S182, the function icon of each application function is respectively displayed on the corresponding display track according to a sequence result of the using frequency, wherein the function icon of the application function with the highest using frequency is displayed on the display track closest to the first icon. For example, as shown in Fig. 4, the function icon of Fighting the Landlord with the highest using frequency is placed on the first display track closest to the user picture, the function icon of LinkGame with the second highest using frequency is placed on the second display track, and the function icon of QQ Speed with the lowest using frequency is placed on the third display frequency.

As another optional implementation mode, after the at least one application function is acquired in Step S14 of the disclosure, the method for displaying the icons in the embodiment of the disclosure may further include that: latest using time of any application function is acquired. For example, the application programs started after the user logs in QQ Game include Fighting the Landlord, LinkGame and QQ Speed. After acquiring Fighting the Landlord, LinkGame and QQ Speed, the processor in the intelligent terminal equipment installed with QQ Game may correspondingly acquire the latest using time of the user for Fighting the Landlord, LinkGame and QQ Speed. For example, the latest using time of the user for Fighting the Landlord is October 20, 2015, the latest using time of the user for LinkGame is October 10, 2015, and the latest using time of the user for QQ Speed is October 1, 2015.

Optionally, in the method for displaying the icons in the embodiment, after the latest using time of the any application function is acquired, the function icon of each application function may be placed and displayed on the corresponding display track on such a basis. Specifically, under the condition that multiple application functions are started in Step S18, the step that the function icon of the any application function is displayed on the corresponding display track may include the following steps.

In Step S181, latest using time of each application function is sequenced in sequence.

In Step S183, the function icon of each application function is respectively displayed on the corresponding display track according to a sequence result of the latest using time, wherein the function icon of the application function of which the latest using time is closest to current system time is displayed on the display track closest to the first icon.

For example, in the interface shown in Fig. 4, the latest using time corresponding to Fighting the Landlord is closest to the current time (for example, October 15, 2015), so that the function icon of Fighting the Landlord is placed on the first display track closest to the user picture,; the latest using time corresponding to LinkGame is relatively farther from the current time, so that the function icon of LinkGame is placed on the second display track; and the latest using time corresponding to QQ Speed is farthest from the current time, so that the function icon of QQ Speed is placed on the third display track.

According to the method for displaying the icons in the embodiment, the basis for displaying the function icon of the application function on the corresponding display track is set, for example, the function icon of the application function which has a relatively higher using frequency or of which using time is relatively closer to the current time is displayed on the display track relatively closer to the first icon according to the using frequency of the user for the application function or the latest using time of the user for the application function, so that the application function in which the user logging in the application program is relatively more interested may be clearly and directly reflected in the graphical manner, and meanwhile, the application function in which the user is relatively more interested is placed on the display track relatively closer to the user icon, so as to the user to rapidly and accurately operate the application function. It is important to note that the basis for displaying the function icon of the application function on the corresponding display track is not limited to the using frequency or the latest using time, and may also be a using times within a preset time period, a time length during use of each time and the like.

As an optional implementation mode, after the function icon of the any application function is displayed on the corresponding display track in Step S18 of the disclosure, the method for displaying the icons in the embodiment may further include that: a display parameter of the function icon of the any application function is regulated according to a distance between the first icon and each display track. The display parameter of the function icon in the embodiment may include any one or more of following parameters: a display brightness, a display chromaticity, a display size, a display outline and the like. Preferably, a basis for regulating the display parameter of the function icon according to the distance between the first icon and each display track in the method for displaying the icons in the embodiment is that: a display parameter value of the function icon of the application function displayed on the display track closest to the first icon is maximum. For example, the function icon of the application function displayed on the display track closest to the first icon is brightest, or darkest in color, or largest in size, or brightest in outline and the like.

For example, Fig. 5 is another optional schematic diagram of displaying function icons on corresponding display tracks according to an embodiment of the disclosure. As shown in Fig. 5, the first display track is closest to the first icon (the user picture), so that the size of the function icon displayed on the first display track is largest; the second display track is relatively farther from the first icon, so that the size of the function icon displayed on the second display track is relatively smaller; and the third display track is farthest from the first icon, so that the size of the function icon displayed on the third display track is smallest.

In the embodiment, a manner of distinguishing the display parameter of the function icon is adopted, so as to the user to distinguish the function icons on different display tracks more clearly, and further rapidly and accurately determine the function icon of the application function in which the user is relatively more interested. Meanwhile, displaying the function icons with different display parameters on different display tracks enhances the display effect of the interface.

As an optional implementation mode, after the function icon of the any application function is displayed on the corresponding display track in Step S18 of the disclosure, the method for displaying the icons in the embodiment may further include that: a color of the display track is regulated to be the same as a color of the function icon of the application function displayed on the display track. For clearly distinguishing different display tracks in the interface and the function icons displayed on different display tracks, colors of different display tracks in the interface are preferably distinguished in the embodiment, and each display track corresponds to a color. Meanwhile, for enhancing the attractive appearance of the display effect of the interface, the color of the display track is preferably regulated to be the same as the color of the function icon displayed thereon in the embodiment.

As an optional implementation mode, after the function icon of the any application function is displayed on the corresponding display track in Step S18 of the disclosure, the method for displaying the icons in the embodiment may further include that: the function icon of the any application function is controlled to move on the corresponding display track according to a predetermined direction, wherein the movement direction of the function icon on the display track may be a clockwise direction, and may also be a counterclockwise direction. Movement velocities of multiple function icons on the corresponding display tracks may be the same, and may also be different. However, for attractive appearance of the effect of the interface, the movement velocity of the function icon on each display track is preferably regulated into the same movement velocity.

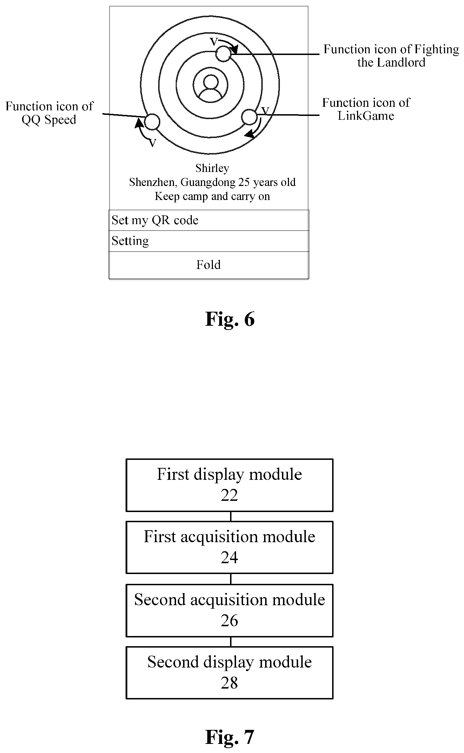

For example, Fig. 6 is another optional schematic diagram of displaying function icons on corresponding display tracks according to an embodiment of the disclosure. As shown in Fig. 6, three function icons move on respective display tracks around the first icon, movement directions are all the clockwise direction, and movement velocities are all velocity v.

According to the method for displaying the icons in the embodiment, the function icons are controlled to move along the display tracks around the first icon according to the predetermined direction, so that the dynamic display effect of the interface is enhanced, and the user experience may be effectively improved.

As an optional implementation mode, after the function icon of the any application function is displayed on the corresponding display track in Step S18 of the disclosure, the method for displaying the icons in the embodiment may further include the following steps.

In Step S202, a first touch signal is received, wherein the first touch signal is a signal generated by touching the function icon of the application function. For example, in the interface shown in Fig. 4, the first touch signal may be a signal generated by clicking or clicking twice the function icon of Fighting the Landlord by the user, or pressing the function icon of Fighting the Landlord for long or pressing the function icon of Fighting the Landlord for long and dragging it towards a direction of the first icon. The first touch signal substantially represents that the user selects a certain required application function in the interface.

In Step S204, the interface is switched into a function page corresponding to the application function according to the first touch signal. For example, after the processor receives the first touch signal generated by clicking the function icon of Fighting the Landlord, the processor may switch the interface to a function page of Fighting the Landlord for a next related operation of the user.

In the embodiment, operating (such as clicking and dragging) the function icon in the interface may implement switching of the corresponding application function page to achieve a purpose of enabling the user to simply and rapidly selecting the required application function and further improve the user experience.

As an optional implementation mode, after the function icon of the any application function is displayed on the corresponding display track in Step S18 of the disclosure, the method for displaying the icons in the embodiment may further include the following steps.

In Step S212, a second touch signal is received, wherein the second touch signal is a signal of sharing the interface to a target object. A touch area with a sharing function is set in the interface of the embodiment, and the user may share the interface to the target object by touching the area, wherein the target object may be a friend in an address book, and may also be WeChat Moments and the like.

In Step S214, a screenshot of the interface is acquired. After the processor receives the second touch signal, the processor may acquire the screenshot of the interface, wherein there are no limits made to a manner of acquiring the screenshot of the interface in the embodiment of the disclosure, and a screen snap or screenshot manner and the like may be adopted.

In Step S216, the screenshot of the interface is sent to a target object according to the second touch signal. Optionally, at the same time of sending the screenshot of the interface to the target object, the processor may further provide a function of making supplementary descriptions about the shared screenshot of the interface for the user, and the user may make the supplementary descriptions about the shared screenshot of the interface to further improve an interest of another user in the application program.

According to the embodiment, the function of sharing the application program is provided for the user, so that interactivity between the user and the friend is improved, not only is the user experience improved, but also a user group of the application program may further be expanded.

As an optional implementation mode, a track parameter of the display track and an icon parameter of the function icon displayed on the corresponding display track both change in real time in the embodiment of the disclosure, wherein the track parameter may include any one or more of the following parameters: a track line color, a track line thickness, a motion state of the track, a rotation direction of the track and the distance between any two tracks; and the icon parameter may include any one or more of the following parameters: an icon color, an icon size, an icon shape and an icon movement direction.

In the embodiment, the track parameter of the display track and the icon parameter of the function icon thereon are regulated in real time according to the using parameter of the user for the application function of the application program. Every time when the user executes an operation on the application function of the application program, the processor may update the using parameter of the application function of the application program and then regulate the track parameter of the display track and the icon parameter of the function icon thereon according to the updated using parameter. In the embodiment, the track parameter of the display track and the icon parameter of the function icon thereon are regulated in real time, so that accuracy of reading an association between the user and the application function from the interface is favorably improved, meanwhile, visual fatigue of the user caused by long-term use of the same interface is also avoided, and the user experience is greatly improved.

It is important to note that: for simple description, each method embodiment of the disclosure is expressed as a combination of a series of actions. However, those skilled in the art should know that the disclosure is not limited to a described action sequence because some steps may be executed in another sequence or at the same time according to the disclosure. Second, those skilled in the art should also know that the embodiments described in the specification all belong to preferred embodiments and involved actions and modules are optional for the disclosure.

From the above descriptions about the implementation modes, those skilled in the art should clearly know that the method according to the embodiment may be implemented in a manner of combining software and a necessary universal hardware platform, and of course, may also be implemented by hardware, and the former is a better implementation mode under many conditions. Based on such an understanding, the technical solution of the disclosure substantially or a part making contributions to the related technology may be embodied in form of software product, and the computer software product is stored in a storage medium (such as a Read-Only Memory (ROM)/RAM, a magnetic disk and an optical disk), including a plurality of instructions configured to start a piece of terminal equipment (which may be a mobile phone, a computer, a server, network equipment or the like) to execute the method of each embodiment of the disclosure.

### Embodiment 2

According to the embodiment of the disclosure, a device for displaying icons, which is configured to implement the abovementioned method for displaying the icons, is further provided. Fig. 7 is a schematic diagram of a device for displaying icons according to an embodiment of the disclosure. As shown in Fig. 7, the device includes: a first display module 22, a first acquisition module 24, a second acquisition module 26 and a second display module 28,
wherein the first display module 22 is configured to display a first icon and at least one display track in an interface, wherein the first icon is a user icon of a user currently logging in an application program, and the display track is a path centering on the first icon and around the first icon; the first acquisition module 24 is configured to acquire at least one application function started after the user logs in the application program; the second acquisition module 26 is configured to acquire a function icon of any application function; and the second display module 28 is configured to display the function icon of the any application function on the corresponding display track.

In the device for displaying the icons in the embodiment, the first display module 22 may be configured to execute Step S12 in the embodiment of the disclosure, the first acquisition module 24 may be configured to execute Step S14 in the embodiment of the disclosure, the second acquisition module 26 may be configured to execute Step S16 in the embodiment of the disclosure, and the second display module 28 may be configured to execute Step S18 in the embodiment of the disclosure.

By the modules, i.e. the first display module 22, the first acquisition module 24, the second acquisition module 26 and the second display module 28, the user icon and the display track are displayed in the interface, and the function icon is displayed on the corresponding display track according to a using parameter of the user for the application function in the application program, so that the user icon of the user logging in the application program and the related function icon are directly and vividly displayed in a graphical representation manner is achieved, meanwhile, technical effects of directly displaying a relationship between the user icon of the user logging in the application program and the related function icon, enhancing a display effect of the interface and improving a user experience are achieved, and the technical problem of poor display effect of a manner of displaying the user icon of the user currently logging in the application program and the related function icons in a list form in the related technology is further solved.

In the disclosure, the first display module 22 may be configured to display the first icon and the at least one display track, wherein the first icon may be a user icon of the user currently logging in the application program, and the first icon is configured to uniquely identify the user logging in the application program. The first icon may be an image including display information such as a user picture and a user signature. A location of the first icon in the interface may be correspondingly regulated according to a size of a display screen of the intelligent terminal equipment, so as to achieve an effect of attractive appearance of the interface.

The display track is a path centering on the first icon and around the first icon. A shape of the display track in the interface may be a concentric circle, and may also be a concentric ring or another shape capable of representing centering on the first icon and around the first icon. The shape of the display track is not specifically limited in the embodiment of the disclosure, and the shape of the display track may be set according to a practical requirement. A distance between any two tracks in multiple display tracks may be the same, and may also be different. However, for attractive appearance of interface display, the distance between any two display tracks in the interface of the embodiment of the disclosure is the same. A display color of each display track may be the same, and may also be different. For directly and clearly distinguishing different display tracks in the interface, the color of each display track is different, that is, each display track uniquely corresponds to one color. Or, a width of each display track is different.

The first icon and display tracks displayed in the interface by the first display module 22 may present a flat panel display effect, and may also present a three-dimensional display effect. Optionally, the first display module 22 may dynamically display the first icon and the at least one display track. For example, the first icon may jitter at a small amplitude at a location or flicker according to a preset time or the like. A moving bright spot may be designed on the display track, and the moving bright spot may rotate around the first icon along the display track where it is.

The first display module 22 may display the first icon and the at least one display track in multiple manners, the display manners are only preferred embodiments of the disclosure, and it does not mean that that the first display module 22 only includes the display manners. For improving a display effect and attractive appearance of the interface, the embodiment of the disclosure may further include other manners capable of enhancing the display effect of the interface, which will not be described with examples one by one herein.

In the first acquisition module 24, after the user logs in the application program, at least one application function contained in the application program may be activated and run, a corresponding function icon is correspondingly generated for each application function in running, and the function icon is configured to uniquely identify the corresponding application function. A shape and content of the function icon may be designed according to the corresponding application function. For example, an icon of QQ Speed in the QQ game community is an image including a word "Speed".

When the application program is installed in intelligent terminal equipment for the first time, part of application functions of the at least one application function contained in the application program are in an active state, the other part of application functions are in an inactive state, wherein function icons corresponding to the application functions in the active state may be displayed in an interface corresponding to the application program; and icons of the application functions in the inactive state may not be displayed in the interface corresponding to the application program, and the application functions of this part are required to be activated and installed by the user logging in the application program according to own requirement.

Optionally, the application program in the first acquisition module 24 may further support the application addition or deletion of the application function, and the user logging in the application program may delete an application function which is pre-contained in the application program and in the active state, and may also add a new application function which is not contained in the application program. In the embodiment, by setting the application program to have a function of adding or deleting the application functions greatly meets the requirement of the user is greatly met and the user' usage experience is improved.

After the user logs in the application program, the application functions in the active state are correspondingly started, and the application functions in the inactive state are not started. The first acquisition module 24 detects whether at least one application function in the application program is in the active state or not to acquire the at least one application function started after the user logs in the application program.

Optionally, a corresponding relationship between an application function and a function icon is pre-stored in the application program in the embodiment of the disclosure, and after the first acquisition module 24 acquires the at least one application function started after the user logs in the application program, the second acquisition module 26 may acquire a function icon of the started application function according to the corresponding relationship between the application function and the function icon.

For example, after the user logs in QQ Game, started application functions include Fighting the Landlord, LinkGame and QQ Speed, wherein a function icon of Fighting the Landlord, a function icon of LinkGame and a function icon of QQ Speed are pre-stored in an application program corresponding to QQ Game. After the first acquisition module 24 acquires the started application functions, i.e. Fighting the Landlord, LinkGame and QQ Speed, the second acquisition module 26 may acquire the function icon of Fighting the Landlord, the function icon of LinkGame and the function icon of QQ Speed according to the corresponding relationship respectively.

According to the embodiment of the disclosure, the corresponding relationship between the application function of the application program and the function icon is pre-stored, so that a processor of the intelligent terminal equipment may conveniently and rapidly search for the function icon of the started application function, and the operation efficiency is further improved.

The display track in the second display module 28 is a track where the function icon is located and which is configured to display the function icon, that is, the function icon acquired by the second acquisition module 26 may be displayed on the display track in the interface. In the second display module 28, as an optional implementation mode, a number of display tracks may be the same as a number of function icons, that is, each display track is configured to display one function icon. If only one application function is started after the user logs in the application program, only one display track is formed around the first icon, and a function icon of the application function may be displayed on the display track. If multiple application functions are started after the user logs in the application program, multiple display tracks are around the first icon, and each display track is configured to display one function icon.

In an optional embodiment provided by the disclosure, when multiple function icons are displayed in the interface, a corresponding relationship between the function icons and display tracks is determined by the using parameters of the user logging in the application program for application functions corresponding to the function icons. Specifically, the using parameters of the user for the application functions may be the using frequency, the using time lengths, the latest using time or the like.

For example, the function icons are displayed on the corresponding display tracks by taking the using frequency of the user for the application functions as reference basis. After the user logs in QQ Game, the started application functions include Fighting the Landlord, LinkGame and QQ Speed. The using frequency of the user logging in QQ Game for Fighting the Landlord is 7 times /week, the using frequency for LinkGame is 5 times /week and the using frequency for QQ Speed is 2 times /week. As shown in Fig. 4, three display tracks are displayed around a picture of the user in the interface, i.e. a first display track, a second display track and a third display track according to a sequence from short to long distances away from the user picture respectively. According to a sequence from high using frequency to low using frequency of the user for the application functions, the function icon of Fighting the Landlord is displayed on the first display track, the function icon of LinkGame is displayed on the second display track, and the function icon of QQ Speed is displayed on the third display track. From Fig. 4, it can be directly determined that Fighting the Landlord corresponding to the function icon closest to the user picture is an application function in which the user is interested.

According to the embodiment of the disclosure, the function icons are displaying on the corresponding display tracks according to the using parameters of the user for the application functions, so as to directly display relationships between the user and the application functions corresponding to the function icons in a graphical form, and started the user to conveniently and rapidly locate the application function in which the user is interested, and greatly improve the user's usage experience.

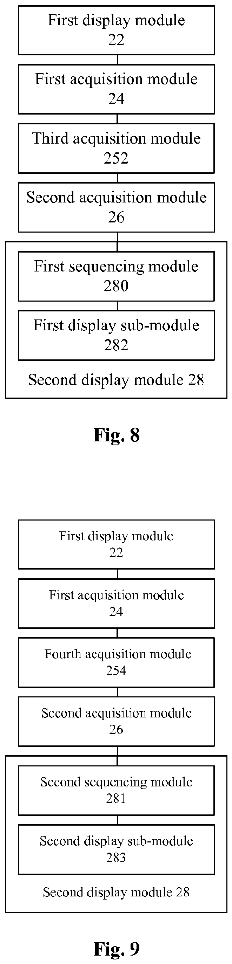

As an optional implementation mode, Fig. 8 is an optional schematic diagram of a device for displaying icons according to an embodiment of the disclosure. As shown in Fig. 8, the device for displaying the icons may further include: a third acquisition module 252, configured to acquire a using frequency of any application function. For example, application programs started after the user logs in QQ Game include Fighting the Landlord, LinkGame and QQ Speed. After the first acquisition module 24 acquires Fighting the Landlord, LinkGame and QQ Speed, the third acquisition module 252 may correspondingly acquire the using frequency of the user for Fighting the Landlord, LinkGame and QQ Speed. For example, the using frequency of the user for Fighting the Landlord is 7 times /week, the using frequency for LinkGame is 5 times /week, and the using frequency for QQ Speed is 2 times /week.

Optionally, as shown in Fig. 8, the second display module 28 may include: a first sequencing module 280, configured to sequence a using frequency of each application function; and a first display sub-module 282, configured to respectively display the function icon of each application function on a corresponding display track according to a sequence result of the using frequency, wherein the function icon of the application function with the highest using frequency is displayed on one display track closest to the first icon.

The first sequencing module 280 may sequence the using frequency of each application function according to a sequence from high using frequency to low using frequency, and may also sequence them according to a sequence from low using frequency to high using frequency. A sequence result of the using frequency will be determined as a basis for a placement location of the function icon of each application function on the display tracks. For example, as shown in Fig. 4, the function icon of Fighting the Landlord with the highest using frequency is placed on the first display track closest to the user picture, the function icon of LinkGame with the second highest using frequency is placed on the second display track, and the function icon of QQ Speed with the lowest using frequency is placed on the third display track.

As another optional implementation mode, Fig. 9 is another optional schematic diagram of a device for displaying icons according to an embodiment of the disclosure. As shown in Fig. 9, the device for displaying the icons may further include: a fourth acquisition module 254, configured to acquire latest using time of any application function. For example, the application programs started after the user logs in QQ Game include Fighting the Landlord, LinkGame and QQ Speed. After the first acquisition module 24 acquires Fighting the Landlord, LinkGame and QQ Speed, the fourth acquisition module may correspondingly acquire the latest using time of the user for them. For example, the latest using time of the user for Fighting the Landlord is October 20, 2015, the latest using time of the user for LinkGame is October 10, 2015, and the latest using time of the user for QQ Speed is October 1, 2015.

Optionally, the second display module 28 may further include: a second sequencing module 281, configured to sequence latest using time of each application function in sequence; and a second display sub-module 283, configured to respectively display the function icon of the each application function on a corresponding display track according to a sequence result of the latest using time, wherein the function icon of the application function of which the latest using time is closest to current system time is displayed on one display track closest to the first icon.

For example, in the interface shown in Fig. 4, the latest using time corresponding to Fighting the Landlord is closest to the current time (for example, October 15, 2015), so that the function icon of Fighting the Landlord is placed on the first display track closest to the picture of the user; the latest using time corresponding to LinkGame is relatively farther from the current time, so that the function icon of LinkGame is placed on the second display track; and the latest using time corresponding to QQ Speed is farthest from the current time, so that the function icon of QQ Speed is placed on the third display track.

According to the device for displaying the icons in the embodiment, the third acquisition module 252 or the fourth acquisition module 254 acquires the basis for displaying the function icon of the application function on the corresponding display track, for example, the function icon of the application function which has a relatively higher frequency or of which using time is relatively closer to the current time is displayed on the display track relatively closer to the first icon according to the using frequency of the user for the application function or the latest using time of the user for the application function, so that the application function in which the user logging in the application program is relatively more interested may be clearly and directly reflected in the graphical manner, and meanwhile, application function in which the user is relatively more interested is placed on the display track relatively closer to the user icon, so as to the user to rapidly and accurately operate the application function. It is important to note that the basis for displaying the function icon of the application function on the corresponding display track is not limited to the using frequency or the latest using time, and may also be a using times within a preset time period, a time length during use of each time and the like.

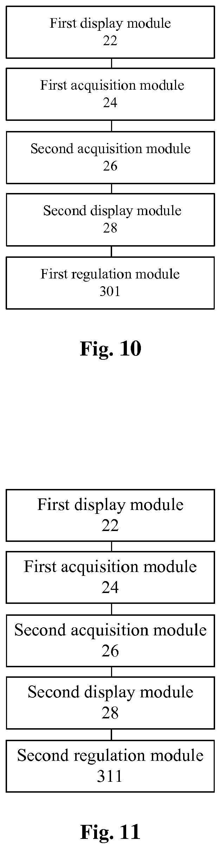

As an optional implementation mode, Fig. 10 is another optional schematic diagram of a device for displaying icons according to an embodiment of the disclosure. As shown in Fig. 10, the device for displaying the icons may further include: a first regulation module 301, configured to regulate a display parameter of the function icon of the any application function according to a distance between the first icon and each display track. The display parameter of the function icon in the embodiment may include any one or more of following parameters: a display brightness, a display chromaticity, a display size, a display outline and the like, wherein a display parameter value of the function icon of the application function displayed on the display track closest to the first icon is maximum.

Preferably, a basis for the first regulation module 301 to regulate the display parameter of the function icon according to the distance between the first icon and each display track is that: the display parameter value of the function icon of the application function displayed on the display track closest to the first icon is maximum. For example, the function icon of the application function displayed on the display track closest to the first icon is brightest, or darkest in color, or largest in size, or brightest in outline and the like.

For example, as shown in Fig. 5, the first display track is closest to the first icon (the user picture), so that the size of the function icon displayed on the first display track is largest; the second display track is relatively farther from the first icon, so that the size of the function icon displayed on the second display track is relatively smaller; and the third display track is farthest from the first icon, so that the size of the function icon displayed on the third display track is smallest.

In the embodiment, a manner of distinguishing the display parameter of the function icon is adopted, so as to the user to distinguish the function icons on different display tracks more clearly further rapidly and accurately determine the function icon of the application function in which the user is relatively more interested. Meanwhile, displaying the function icons with different display parameters on different display tracks enhances the display effect of the interface.

As an optional implementation mode, Fig. 11 is another optional schematic diagram of a device for displaying icons according to an embodiment of the disclosure. As shown in Fig. 11, the device for displaying the icons may further include: a second regulation module 311, configured to regulate a color of the display track to be the same as a color of the function icon of the application function displayed on the display track. For clearly distinguishing different display tracks in the interface and the function icons displayed on different display tracks, the second regulation module 311 of the embodiment preferably distinguishes colors of different display tracks in the interface, and each display track corresponds to a color. Meanwhile, for enhancing the attractive appearance of the display effect of the interface, the second regulation module 311 of the embodiment preferably regulates the color of the display track to be the same as the color of the function icon displayed thereon in the embodiment.

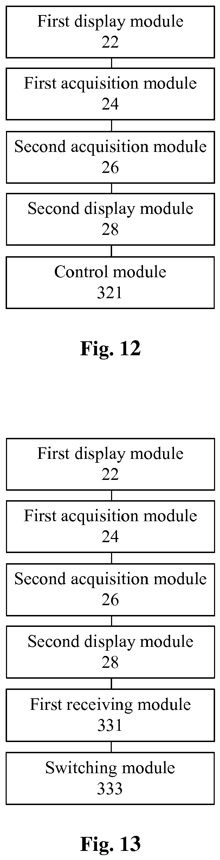

As an optional implementation mode, Fig. 12 is another optional schematic diagram of a device for displaying icons according to an embodiment of the disclosure. As shown in Fig. 12, the device for displaying the icons may further include: a control module 321, configured to control the function icon of the any application function to move on the corresponding display track according to a predetermined direction, wherein the movement direction of the function icon on the display track may be a clockwise direction, and may also be a counterclockwise direction. Movement velocities of multiple function icons on the corresponding display tracks may be the same, and may also be different. However, for attractive appearance of the effect of the interface, the movement velocity of the function icon on each display track is preferably regulated into the same movement velocity.

For example, as shown in Fig. 6, three function icons move on respective display tracks around the first icon, movement directions are all the clockwise direction, and movement velocities are all velocity v.

The control module of the embodiment controls the function icons to move along the display tracks around the first icon according to the predetermined direction, so that the dynamic display effect of the interface is enhanced, and the user experience may be effectively improved.

As an optional implementation mode, Fig. 13 is another optional schematic diagram of a device for displaying icons according to an embodiment of the disclosure. As shown in Fig. 13, the device for displaying the icons may further include: a first receiving module 331, configured to receive a first touch signal, wherein the first touch signal is a signal generated by touching the function icon of the application function; and a switching module 333, configured to switch the interface into a function page corresponding to the application function according to the first touch signal.

For example, in the interface shown in Fig. 4, the first touch signal may be a signal generated by clicking or clicking twice the function icon of Fighting the Landlord by the user, or pressing the function icon of Fighting the Landlord for long or pressing the function icon of Fighting the Landlord for long and dragging it towards a direction of the first icon. The first touch signal substantially represents that the user selects a certain required application function in the interface. In the embodiment, operating (such as clicking and dragging) the function icon in the interface may implement switching of the corresponding application function page to achieve a purpose of enabling the user to simply and rapidly selecting the required application function and further improve the user experience.

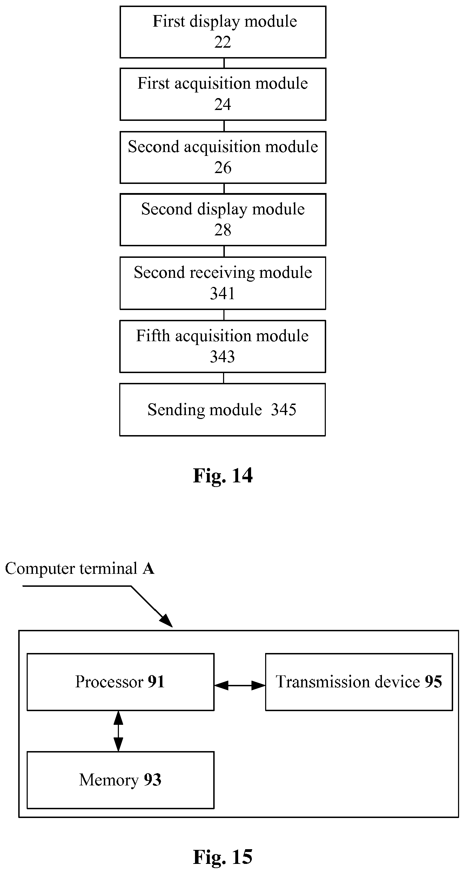

As an optional implementation mode, Fig. 14 is another optional schematic diagram of a device for displaying icons according to an embodiment of the disclosure. As shown in Fig. 14, the device for displaying the icons may further include: a second receiving module 341, configured to receive a second touch signal, wherein the second touch signal is a signal of sharing the interface to a target object; a fifth acquisition module 343, configured to acquire a screenshot of the interface; and a sending module 345, configured to send the screenshot of the interface to a target object according to the second touch signal.

A touch area with a sharing function is set in the interface of the embodiment, and the user may share the interface to the target object by touching the area, wherein the target object may be a friend in an address book, and may also be WeChat Moments and the like. There are no limits made to a manner of acquiring the screenshot of the interface in the embodiment of the disclosure, and a screen snap or screenshot manner and the like may be adopted. Optionally, the sending module sends the screenshot of the interface to the target object, meanwhile, a function of making supplementary descriptions about the shared screenshot of the interface may further be provided for the user, and the user may make the supplementary descriptions about the shared screenshot of the interface to further improve an interest of another user in the application program.

According to the embodiment, the function of sharing the application program is provided for the user, so that interactivity between the user and the friend is improved, not only is the user experience improved, but also a user group of the application program may further be expanded.

As an optional implementation mode, a track parameter of the display parameter and an icon parameter of the function icon displayed on the corresponding display track both change in real time in the embodiment of the disclosure, wherein the track parameter may include any one or more of the following parameters: a track line color, a track line thickness, a motion state of the track, a rotation direction of the track and the distance between any two tracks; and the icon parameter may include any one or more of the following parameters: an icon color, an icon size, an icon shape and an icon movement direction.

In the embodiment, the track parameter of the display track and the icon parameter of the function icon thereon are regulated in real time according to the using parameter of the user for the application function of the application program. Every time when the user executes an operation on the application function of the application program, the processor may update the using parameter of the application function of the application program and then regulate the track parameter of the display track and the icon parameter of the function icon thereon according to the updated using parameter. In the embodiment, the track parameter of the display track and the icon parameter of the function icon thereon are regulated in real time, so that accuracy of reading an association between the user and the application function from the interface is favorably improved, meanwhile, visual fatigue of the user caused by long-term use of the same interface is also avoided, and the user experience is greatly improved.

### Embodiment 3

The embodiment of the disclosure further provides a storage medium. Optionally, in the embodiment, the storage medium may be configured to store program codes executed by a method for displaying icons in the abovementioned embodiment.

Optionally, in the embodiment, the storage medium may be located in at least one piece of network equipment in multiple pieces of network equipment of a computer network.

Optionally, in the embodiment, the storage medium is configured to store program codes configured to execute the following steps:
in S1, a first icon and at least one display track are displayed in an interface, wherein the first icon is a user icon of a user currently logging in an application program, and the display track is a path centering on the first icon and around the first icon;
in S2, at least one application function started after the user logs in the application program is acquired;
in S3, a function icon of any application function is acquired; and
in S4, the function icon of the any application function is displayed on a corresponding display track.

Optionally, the storage medium is further configured to store program codes configured to execute the following steps that: a using frequency of the any application function is acquired; the using frequency of each application function is sequenced; and a function icon of each application function is respectively displayed on the corresponding display track according to a sequencing result of the using frequency, wherein the function icon of the application function with the highest using frequency is displayed on one display track closest to the first icon.

Optionally, the storage medium is further configured to store program codes configured to execute the following steps that: latest using time of the any application function is acquired; the latest using time of each application function is sequenced according to a sequence; and the function icon of each application function is respectively displayed on the corresponding display track according to a sequencing result of the latest using time, wherein the function icon of the application function of which the latest using time is closest to current system time is displayed on one display track closest to the first icon.

Optionally, the storage medium is further configured to store a program code configured to execute the following step that: a display parameter of the function icon of the any application function is regulated according to a distance between the first icon and each display track, the display parameter including any one or more of following parameters: a display brightness, a display chromaticity, a display size and a display outline, wherein a display parameter value of the function icon of the application function displayed on the display track closest to the first icon is maximum.

Optionally, the storage medium is configured to store a program code configured to execute the following step that: a color of the display track is regulated to be the same as a color of the function icon of the application function displayed on the display track.

Optionally, the storage medium is configured to store a program code configured to execute the following step that: the function icon of the any application function is controlled to move on the corresponding display track according to a predetermined direction.

Optionally, the storage medium is configured to store program codes configured to execute the following steps that: a first touch signal is received, wherein the first touch signal is a signal generated by touching the function icon of the application function; and the interface is switched to a function page corresponding to the application function according to the first touch signal.

Optionally, the storage medium is configured to store program codes configured to execute the following steps that: a second touch signal is received, wherein the second touch signal is a signal of sharing the interface to a target object; a screenshot of the interface is acquired; and the screenshot of the interface is sent to the target object according to the second touch signal.

Optionally, in the embodiment, the storage medium may include, but not limited to: various media capable of storing program codes, such as a U disk, a ROM, a RAM, a movable hard disk, a magnetic disk or an optical disk.

### Embodiment 4

The embodiment of the disclosure further provides a computer terminal, which may be any piece of computer terminal equipment in a computer terminal group. Optionally, in the embodiment, the computer terminal may also be replaced with terminal equipment such as a mobile terminal.

Optionally, in the embodiment, the computer terminal may be located in at least one piece of network equipment in multiple pieces of network equipment of a computer network.

Optionally, Fig. 15 is a structure block diagram of a computer terminal according to an embodiment of the disclosure. As shown in Fig. 15, the computer terminal A may include: one or more (only one is shown in the figure) processor 91, a memory 93 and a transmission device 95.

Wherein, the memory 93 may be configured to store a software program or a module, for example, a program instruction/module corresponding to a method and device for displaying icons in the embodiment of the disclosure. The processor 91 runs the software program or module stored in the memory 93, thereby executing various function applications and data processing, namely implementing the method for displaying the icons. The memory 93 may include a high-speed RAM, and may further include a nonvolatile memory, such as one or more magnetic storage devices, flash memories or other nonvolatile solid-state memories. In some examples, the memory 93 may further include memories remotely arranged relative to the processor 91, and these memories may be connected to the computer terminal A through a network. An example of the network includes, but not limited to, the Internet, an intranet of an enterprise, a local area network, a mobile communication network and a combination thereof.

The transmission device 95 is configured to receive or send data through a network. A specific example of the network may include a wired network and a wireless network. In an example, the transmission device 95 includes a NIC, and may be connected with other network equipment and a router through a network cable, thereby communicating with the Internet or the local area network. In an example, the transmission device 95 may be an RF module, and is configured to communicate with the Internet in a wireless manner.

Wherein, the memory 93 is specifically configured to store information about a preset action condition and a preset authorized user and an application program.

The processor 91 may call the information and application program stored in the memory 93 through the transmission device to execute the following steps.

Optionally, the processor 91 may further execute program codes of the following steps.

In S1, a first icon and at least one display track are displayed in an interface, wherein the first icon is a user icon of a user currently logging in the application program, and the display track is a path centering on the first icon and around the first icon.

In S2, at least one application function started after the user logs in the application program is acquired.

In S3, a function icon of any application function is acquired.

In S4, the function icon of the any application function is displayed on a corresponding display track.

Optionally, in the embodiment, a storage medium is further configured to store program codes configured to execute the following steps:
in S1, after at least one application function is acquired, a using frequency of the any application function is acquired, wherein, under the condition that multiple application functions are started, the step that the function icon of the any application function is displayed on the corresponding display track includes the following steps:
   in S2, the using frequency of each application function is sequenced; and
in S3, a function icon of each application function is respectively displayed on the corresponding display track according to a sequencing result of the using frequency, wherein the function icon of the application function with the highest using frequency is displayed on one display track closest to the first icon.

Optionally, in the embodiment, the storage medium is further configured to store program codes configured to execute the following steps:
in S1, after the at least one application function is acquired, latest using time of the any application function is acquired, wherein, under the condition that multiple application functions are started, the step that the function icon of the any application function is displayed on the corresponding display track includes the following steps:
   in S2, the latest using time of each application function is sequenced according to a sequence; and
in S3, the function icon of each application function is respectively displayed on the corresponding display track according to a sequencing result of the latest using time, wherein the function icon of the application function of which the latest using time is closest to current system time is displayed on one display track closest to the first icon.

Optionally, in the embodiment, the storage medium is further configured to store a program code configured to execute the following step:
in S1, after the function icon of the any application function is displayed on the corresponding display track, a display parameter of the function icon of the any application function is regulated according to a distance between the first icon and each display track, the display parameter including any one or more of following parameters: a display brightness, a display chromaticity, a display size and a display outline,
wherein a display parameter value of the function icon of the application function displayed on the display track closest to the first icon is maximum.

Optionally, in the embodiment, the storage medium is configured to store a program code configured to execute the following step:
in S1, after the function icon of the any application function is displayed on the corresponding display track, a color of the display track is regulated to be the same as a color of the function icon of the application function displayed on the display track.

Optionally, in the embodiment, the storage medium is configured to store a program code configured to execute the following step:
in S1, after the function icon of the any application function is displayed on the corresponding display track, the function icon of the any application function is controlled to move on the corresponding display track according to a predetermined direction.

Optionally, in the embodiment, the storage medium is configured to store program codes configured to execute the following steps:
in S1, after the function icon of the any application function is displayed on the corresponding display track, a first touch signal is received, wherein the first touch signal is a signal generated by touching the function icon of the application function; and
in S2, the interface is switched to a function page corresponding to the application function according to the first touch signal.

Optionally, in the embodiment, the storage medium is configured to store program codes configured to execute the following steps:
in S1, after the function icon of the any application function is displayed on the corresponding display track, a second touch signal is received, wherein the second touch signal is a signal of sharing the interface to a target object;
in S2, a screenshot of the interface is acquired; and
in S3, the screenshot of the interface is sent to the target object according to the second touch signal.

Optionally, specific examples in the embodiment may refer to examples described in embodiment 1 and embodiment 2, and will not be elaborated herein.

Sequence numbers of the embodiments of the disclosure are only adopted for description, and do not represent quality of the embodiments.

If being implemented in form of software function unit and sold or used as an independent product, an integrated unit in the embodiment may be stored in a computer-readable storage medium. Based on such an understanding, the technical solutions of the disclosure substantially or parts making contributions to the related technology or all or part of the technical solutions may be embodied in form of software product, and the computer software product is stored in a storage medium, including a plurality of instructions configured to start one or more pieces of computer equipment (which may be a personal computer, a server, network equipment or the like) to execute all or part of the steps of the method in each embodiment of the disclosure.

In the embodiments of the disclosure, each embodiment is described with different focuses, and parts which are not elaborated in a certain embodiment may refer to related descriptions of the other embodiments.

In some embodiments provided by the disclosure, it should be understood that the disclosed client may be implemented in another manner, wherein the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the units or the modules, and may be electrical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each function unit in each embodiment of the disclosure may be integrated into a processing unit, each unit may also exist independently, and two or more than two units may also be integrated into a unit. The abovementioned integrated unit may be implemented in a hardware form, and may also be implemented in form of hardware and software function unit.

The above is only the preferred implementation mode of the disclosure. It should be pointed out that those skilled in the art may further make a plurality of improvements and embellishments without departing from the principle of the disclosure and these improvements and embellishments shall also fall within the scope of protection of the disclosure.

### Industrial Applicability

In the embodiments of the disclosure, the following manner is adopted: the first icon and the at least one display track are displayed in the interface, wherein the first icon is the user icon of the user currently logging in the application program, and the display track is the path centering on the first icon and around the first icon; the at least one application function started after the user logs in the application program is acquired; the function icon of the any application function is acquired; and the function icon of the any application function is displayed on a corresponding display track. The user icon and the display track are displayed in the interface, and the function icon of the application function started after the user logs in the application program is displayed on the corresponding display track, so that a purpose of directly and vividly displaying the user icon of the user logging in the application program and the related function icon in a graphical representation manner is achieved, technical effects of directly displaying a relationship between the user icon of the user logging in the application program and the related function icon, enhancing a display effect of the interface and improving the user's use experience are achieved, and the technical problem of poor display effect caused by a manner of displaying the user icon of the user currently logging in the application program and the related function icons in a list form in the related technology is further solved.

## Claims

1. A method for display icons, comprising:
displaying a first icon and at least one display track in an interface, wherein the first icon is a user icon of a user currently logging in an application program, and the display track is a path centering on the first icon and around the first icon;
acquiring at least one application function started after the user logs in the application program;
acquiring a function icon of any application function; and
displaying the function icon of the any application function on a corresponding display track.

2. The method as claimed in claim 1, after acquiring the at least one application function, further comprising: acquiring a using frequency of the any application function, wherein, under the condition that multiple application functions are started, the step of displaying the function icon of the any application function on the corresponding display track comprises:
sequencing the using frequency of each application function; and
respectively displaying a function icon of the each application function on a corresponding display track according to a sequencing result of the using frequency, wherein the function icon of the application function with the highest using frequency is displayed on one display track closest to the first icon.

3. The method as claimed in claim 1, after acquiring the at least one application function, further comprising: acquiring latest using time of the any application function, wherein, under the condition that multiple application functions are started, the step of displaying the function icon of the any application function on the corresponding display track comprises:
sequencing the latest using time of each application function in sequence; and
respectively displaying the function icon of the each application function on a corresponding display track according to a sequencing result of the latest using time, wherein the function icon of the application function of which the latest using time is closest to current system time is displayed on one display track closest to the first icon.

4. The method as claimed in any one of claims 1-3, after displaying the function icon of the any application function on the corresponding display track, further comprising:
regulating a display parameter of the function icon of the any application function according to a distance between the first icon and each display track, the display parameter comprising any one or more of following parameters: a display brightness, a display chromaticity, a display size and a display outline,
wherein a display parameter value of the function icon of the application function displayed on the display track closest to the first icon is maximum.

5. The method as claimed in any one of claims 1-3, after displaying the function icon of the any application function on the corresponding display track, further comprising:
regulating a color of the display track to be the same as a color of the function icon of the application function displayed on the display track.

6. The method as claimed in any one of claims 1-3, after displaying the function icon of the any application function on the corresponding display track, further comprising:
controlling the function icon of the any application function to move on the corresponding display track according to a predetermined direction.

7. The method as claimed in any one of claims 1-3, after displaying the function icon of the any application function on the corresponding display track, further comprising:
receiving a first touch signal, wherein the first touch signal is a signal generated by touching the function icon of the application function; and
switching the interface to a function page corresponding to the application function according to the first touch signal.

8. The method as claimed in any one of claims 1-3, after displaying the function icon of the any application function on the corresponding display track, further comprising:
receiving a second touch signal, wherein the second touch signal is a signal of sharing the interface to a target object;
acquiring a screenshot of the interface; and
sending the screenshot of the interface to the target object according to the second touch signal.

9. The method as claimed in any one of claims 1-3, wherein a track parameter of the display track and an icon parameter of the function icon displayed on the corresponding display track both change in real time, wherein the track parameter comprises any one or more of following parameters: a track line color, a track line thickness, a motion state of the track, a rotation direction of the track and the distance between any two tracks; and the icon parameter comprises any one or more of following parameters: an icon color, an icon size, an icon shape and an icon movement direction.

10. A device for displaying icons, comprising:
a first display module, configured to display a first icon and at least one display track in an interface, wherein the first icon is a user icon of a user currently logging in an application program, and the display track is a path centering on the first icon and around the first icon;
a first acquisition module, configured to acquire at least one application function started after the user logs in the application program;
a second acquisition module, configured to acquire a function icon of any application function; and
a second display module, configured to display the function icon of the any application function on a corresponding display track.

11. The device as claimed in claim 10, further comprising:
a third acquisition module, configured to acquire a using frequency of the any application function,
wherein the second display module comprises:
a first sequencing module, configured to sequence the using frequency of each application function; and
a first display sub-module, configured to respectively display a function icon of each application function on a corresponding display track according to a sequencing result of the using frequency, wherein the function icon of the application function with the highest using frequency is displayed on one display track closest to the first icon.

12. The device as claimed in claim 10, further comprising:
a fourth acquisition module, configured to acquire latest using time of the any application function,
wherein the second display module comprises:
a second sequencing module, configured to sequence the latest using time of each application function in sequence; and
a second display sub-module, configured to respectively display the function icon of the each application function on a corresponding display track according to a sequencing result of the latest using time, wherein the function icon of the application function of which the latest using time is closest to current system time is displayed on one display track closest to the first icon.

13. The device as claimed in any one of claims 10-12, further comprising:
a first regulation module, configured to regulate a display parameter of the function icon of the any application function according to a distance between the first icon and each display track, the display parameter comprising any one or more of following parameters: a display brightness, a display chromaticity, a display size and a display outline,
wherein a display parameter value of the function icon of the application function displayed on the display track closest to the first icon is maximum.

14. The device as claimed in any one of claims 10-12, further comprising: a second regulation module, configured to regulate a color of the display track to be the same as a color of the function icon of the application function displayed on the display track.

15. The device as claimed in any one of claims 10-12, further comprising:
a control module, configured to control the function icon of the any application function to move on the corresponding display track according to a predetermined direction.

16. The device as claimed in any one of claims 10-12, further comprising:
a first receiving module, configured to receive a first touch signal, wherein the first touch signal is a signal generated by touching the function icon of the application function; and
a switching module, configured to switch the interface to a function page corresponding to the application function according to the first touch signal.

17. The device as claimed in any one of claims 10-12, further comprising:
a second receiving module, configured to receive a second touch signal, wherein the second touch signal is a signal of sharing the interface to a target object;
a fifth acquisition module, configured to acquire a screenshot of the interface; and
a sending module, configured to send the screenshot of the interface to the target object according to the second touch signal.

18. A storage medium, configured to store program codes configured to execute the following steps:
displaying a first icon and at least one display track in an interface, wherein the first icon is a user icon of a user currently logging in an application program, and the display track is a path centering on the first icon and around the first icon;
acquiring at least one application function started after the user logs in the application program;
acquiring a function icon of any application function; and
displaying the function icon of the any application function on a corresponding display track.

19. The storage medium as claimed in claim 18, further configured to store program codes configured to execute the following steps:
after acquiring the at least one application function, acquiring a using frequency of the any application function, wherein, under the condition that multiple application functions are started, the step of displaying the function icon of the any application function on the corresponding display track comprises:
sequencing the using frequency of each application function; and
respectively displaying a function icon of the each application function on the corresponding display track according to a sequencing result of the using frequency, wherein the function icon of the application function with the highest using frequency is displayed on one e display track closest to the first icon.

20. The storage medium as claimed in claim 18, further configured to store program codes configured to execute the following steps:
after acquiring the at least one application function, acquiring latest using time of the any application function, wherein, under the condition that multiple application functions are started, the step of displaying the function icon of the any application function on the corresponding display track comprises:
sequencing the latest using time of each application function in sequence; and
respectively displaying the function icon of the each application function on the corresponding display track according to a sequencing result of the latest using time, wherein the function icon of the application function of which the latest using time is closest to current system time is displayed on one display track closest to the first icon.

21. The storage medium as claimed in any one of claims 18-20, further configured to store a program code configured to execute the following step:
after displaying the function icon of the any application function on the corresponding display track, regulating a display parameter of the function icon of the any application function according to a distance between the first icon and each display track, the display parameter comprising any one or more of following parameters: a display brightness, a display chromaticity, a display size and a display outline,
wherein a display parameter value of the function icon of the application function displayed on the display track closest to the first icon is maximum.

22. The storage medium as claimed in any one of claims 18-20, further configured to store a program code configured to execute the following step:
after displaying the function icon of the any application function on the corresponding display track, regulating a color of the display track to be the same as a color of the function icon of the application function displayed on the display track.

23. The storage medium as claimed in any one of claims 18-20, further configured to store a program code configured to execute the following step:
after displaying the function icon of the any application function on the corresponding display track, controlling the function icon of the any application function to move on the corresponding display track according to a predetermined direction.

24. The storage medium as claimed in any one of claims 18-20, further configured to store program codes configured to execute the following steps:
after displaying the function icon of the any application function on the corresponding display track, receiving a first touch signal, wherein the first touch signal is a signal generated by touching the function icon of the application function; and
switching the interface to a function page corresponding to the application function according to the first touch signal.

25. The storage medium as claimed in any one of claims 18-20, further configured to store program codes configured to execute the following steps:
after displaying the function icon of the any application function on the corresponding display track, receiving a second touch signal, wherein the second touch signal is a signal of sharing the interface to a target object;
acquiring a screenshot of the interface; and
sending the screenshot of the interface to the target object according to the second touch signal.
